(19) Europäisches Patentamt
European Patent Office
Office européen des brevets

(11) **EP 0 603 677 B1**

(12) **EUROPÄISCHE PATENTSCHRIFT**

(45) Veröffentlichungstag und Bekanntmachung des Hinweises auf die Patenterteilung:
**25.09.1996   Patentblatt 1996/39**

(51) Int Cl.[6]: **C08F 8/12**, C08F 20/44

(21) Anmeldenummer: **93119954.1**

(22) Anmeldetag: **10.12.1993**

(54) **Verfahren zur Herstellung niedermolekularer Acrylnitrilpolymerisate sowie deren Verwendung**

Process for the manufacture of low molecular weight polymers of acrylonitrile and the use thereof

Procédé de préparation de polymères d'acrylonitrile à bas poids moléculaire, ainsi que leur application

(84) Benannte Vertragsstaaten:
**AT BE CH DE FR GB IT LI NL SE**

(30) Priorität: **23.12.1992   DE 4243783**

(43) Veröffentlichungstag der Anmeldung:
**29.06.1994   Patentblatt 1994/26**

(73) Patentinhaber: **WOLFF WALSRODE AKTIENGESELLSCHAFT**
**D-29699 Walsrode (DE)**

(72) Erfinder:
- **Korte, Siegfried, Dr.**
  **D-51519 Odenthal (DE)**
- **Alberts, Heinrich, Dr.**
  **D-51519 Odenthal (DE)**
- **Böhmer, Branislav, Dr.**
  **D-29664 Walsrode (DE)**
- **Karstens, Werner**
  **D-29699 Bomlitz (DE)**
- **Koch, Wolfgang, Dr.**
  **D-29699 Bomlitz (DE)**
- **Poersch-Panke, Hans-Günter, Dr.**
  **D-29664 Walsrode (DE)**
- **Szablikowski, Klaus, Dr.**
  **D-29664 Walsrode (DE)**

(74) Vertreter: **Braun, Rolf, Dr. et al**
**Bayer AG**
**Konzernverwaltung RP**
**Patentabteilung**
**51368 Leverkusen (DE)**

(56) Entgegenhaltungen:
**EP-A- 0 046 573**        **EP-A- 0 135 727**
**EP-A- 0 185 458**        **FR-A- 2 373 566**

**Beschreibung**

Die Erfindung betrifft ein Verfahren zur kontinuierlichen Herstellung von Polyacrylnitrilhydrolysaten und deren Verwendung als Dispergier- und Mahlhilfsmittel für Pigmente und Füllstoffe, wie z.B. Kaolin, CaCO$_3$ oder Gips.

Die durch alkoholische oder saure Hydrolyse von Polyacrylnitrilen und Acrylnitril-Copolymeren gewonnenen Produkte sind vielfältig einsetzbar. Genannt seien die Verwendung als Fluid-loss-Additiv bei der Erdölförderung, der Einsatz als Emulgator oder Schutzkolloid bei der Durchführung von Emulsions- oder Fällungspolymerisationen. Darüber hinaus werden derartige hydrolytisch aus Acrylnitril-Polymeren gewonnene Polyacrylsäuren und deren Salze als Hilfsmittel für wäßrige Pigment- und Füllstoff-Dispersionen propagiert. Für diese Anwendungen sind niedermolekulare Einstellungen vorteilhaft.

Polyacrylnitril-Hydrolysate werden in an sich bekannter Weise durch Polymerisation von Acrylnitril und anschließender saurer oder alkalischer Hydrolyse hergestellt.

Die für die dispergierenden Eigenschaften erforderlichen niedrigen Molekulargewichte werden nach bekannter Lehre durch Einsatz von Redox-Initiator-Systemen in Gegenwart von Wasser/Isopropanol-Mischungen nach dem Prinzip der Fällungspolymerisation oder wie in "Colloid and Polymer Science 256 (1978), S. 1027", beschrieben, in Dimethylformamid als Reaktionsmedium erzielt.

Es sind mehrere Methoden zur Herstellung von niedermolekularen Polyacrylnitrilen und Acrylnitril-Copolymeren beschrieben.

In der US-A 2 763 636 wird ein Lösungspolymerisations-Verfahren zur Herstellung niedermolekularer Polyacrylnitrile mit Molekulargewichten Mv ca. 2.000 bis 30.000 beschrieben. Die Polymerisation erfolgt in konzentrierten wäßrigen Zinkchlorid-Lösungen mit Peroxiden als Katalysatoren. Eine aufwendige Reinigung des Polyacrylnitrils ist nach der Fällung erforderlich.

In der DE-PS 26 55 714 wird ein Verfahren zur Herstellung von niedermolekularen Polyacrylnitrilen beschrieben, bei dem die Polymerisation in Isopropanol-Wasser-Gemischen mit Wasserstoffperoxid und Hydroxylamin bzw. Hydrazinsalzen als Redoxsystem diskontinuierlich durchgeführt wird. Vor der weiteren Verarbeitung zu Dispergier- und Emulgierhilfsmittel durch Hydrolyse der so hergestellten Polyacrylnitrile müssen diese isoliert und durch Wasser von den toxischen Resten bzw. Reaktionsprodukten des Reduktionsmittels Hydroxylamin befreit werden.

Ein weiteres Verfahren zur Herstellung von Polyacrylnitrilen mit geringen K-Werten, d.h. niedrigen Molekulargewichten ist aus der EP 0 135 727 bekannt, nach dem durch kontinuierliche oder diskontinuierliche Fällungspolymerisation mittels eines Redoxsystems aus Persulfat, Pyrosulfit und Mohr'schem Salz im wäßrigen Milieu u.a. Ausgangsprodukte für Emulgatoren, Dispergatoren, Ablagerungsverhinderer bei Tiefbohrungen und bei der Erdölförderung hergestellt werden. Der hohe Gehalt an anorganischen Salzen aus dem Redoxsystem macht die Isolierung des Polyacrylnitrils durch Filtrieren bzw. Zentrifugieren und Waschen mit Wasser erforderlich. Nur so können die für die Hydrolyse gewünschten Produkte hergestellt werden.

Die beschriebenen Verfahren zur Herstellung von niedermolekularen Polyacrylnitrilen stellen eine erhebliche Belastung der Abwässer dar.

Die EP 0 047 381 beschreibt ein vorteilhaftes, umweltgerechtes Verfahren zur Herstellung wasserlöslicher Hydrolyseprodukte von Polyacrylnitril-Hydrolysaten. Diese sind als Schutzkolloide, Veredlungsmittel für Celluloseprodukte und/oder Ausgangsprodukte für Klebstoffe und Leimungsmittel wirksam.

Zur Verwendung der entsprechend der EP 0 047 381 hergestellten Polyacrylnitril-Hydrolysate als Dispergierhilfsmittel und/oder Pigmentverteiler zur Verhinderung der Gelierung und zum Abbau der Viskosität von mineralischen Suspensionen sind nur Hydrolysate mit hinreichend niedrigen Molekulargewichten einsetzbar.

Solche Produkte sind aus den gewonnenen Hydrolysaten gemäß der EP 0 047 381 nur durch Abbau mit Wasserstoffperoxid nach der Lehre der EP-A 0 175 116 erhältlich.

Aus der EP 0 129 329 und EP 0 185 458 ist bekannt, daß außer eines hinreichend niedrigen Molekulargewichtes auch eine enge Molekulargewichtsverteilung, ausgedrückt durch die Polydispersität Mw/Mn oder Uneinheitlichkeit U = (Mw/Mn) - 1, des polymeren Hilfsmittels für die Dispergierung und Mahlung von mineralischen Suspensionen erforderlich ist.

Aufgabe der vorliegenden Erfindung war es daher, feinteilige Acrylnitrilpolymerisate mit niedrigen Molekulargewichten und enger Molekulargewichtsverteilung in Form wässriger Suspensionen oder Emulsionen zur Verfügung zu stellen, die unter Verzicht auf wirtschaftlich und/oder ökologisch belastende Aufbereitungsverfahren direkt hydrolysiert werden können und Mittel zur Dispergierung und Mahlung von mineralischen Stoffen mit den gewünschten Eigenschaften ergeben.

Erfindungsgemäß gelingt es, durch kontinuierliche Fällungspolymerisation in Wasser/Isopropanol-Gemischen in Gegenwart peroxidischer Substanzen Acrylnitril-Polymerisate bzw. Copolymerisate des Acrylnitrils herzustellen, die ohne Isolierung in einem kontinuierlich geführten Hydrolyseprozeß unter Erhalt der im Ausgangsprodukt Polyacrylnitril bzw. der Copolymerisate vorgegebenen Verteilungscharakteristik in wasserlösliche Produkte zur Dispergierung und Mahlung von mineralischen Suspensionen überführt werden.

Gegenstand der Erfindung ist daher ein Verfahren zur Herstellung von wasserlöslichen, überwiegend Carboxylatgruppen enthaltenden Polymerisaten durch Hydrolyse von Polyacrylnitrilen, bzw. Acrylnitril-Copolymeren, dadurch gekennzeichnet, daß man zunächst durch kontinuierliche Fällungspolymerisation in Wasser/Isopropanol-Gemischen mit Hilfe von Persulfat-Initiatoren mindestens 85 Gew.-% Acrylnitril enthaltende Polymerisate mit einem mittleren Molekulargewicht Mw von etwa 1.000 bis 20.000 g/mol, einer molekularen Uneinheitlichkeit (U = Mw/Mn - 1) von 0,3 bis 2,0 und einem 0,5 Einheiten pro Molekül übersteigenden Gehalt an Hydroxypropyl-Endgruppen herstellt und die nach der Abtrennung des Isopropanols anfallenden Polymerisatsuspensionen mit mittleren Teilchengrößen von 5 bis 50 μm einem kontinuierlichen Hydrolyseprozeß - unter Einhaltung der vorgegebenen molekularen Verteilungscharakteristik - in Gegenwart von 50 bis 110 Mol-% eines Alkalihydroxids bei 120 bis 220°C und mittleren Verweilzeiten von 6 bis 180 min. unterwirft.

Bevorzugt weisen die erfindungsgemäßen Polyacrylnitrile und Acrylnitril-Copolymerisate ein Molekulargewicht Mw von 2.000 bis 15.000 und eine molekulare Uneinheitlichkeit U = Mw/Mn - 1 von 0,3 bis 2,0 auf, insbesondere ein Molekulargewicht von 2.000 bis 10.000 und eine Uneinheitlichkeit von 0,5 bis 1,5. Die Molekulargewichte und die molekulare Uneinheitlichkeit wurden mittels der Gelpermeations-Chromatographie bestimmt. Die Kalibrierung erfolgte über die Methode des "Breiten Standards". Als Eluent dient Dimethylformamid mit 1,0 Gew.-% Lithiumchlorid.

Als Comonomere können alle mit Acrylnitril copolymerisierbaren Verbindungen eingesetzt werden. Bevorzugt sind Monomere, die die Hydrolyse der Nitrilgruppe im Polyacrylnitril begünstigen, Besonders bevorzugt sind in diesem Zusammenhang (Meth)Acrylamid, Methylacrylat und (Meth)Acrylsäure. Ebenfalls bevorzugt sind Monomere, die die Hydrolysebedingungen unverändert überstehen. In dieser Gruppe von Monomeren sind Styrol, Styrolsulfonsäure und Vinylsulfonsäure besonders bevorzugt.

Eine weitere bevorzugte Gruppe von copolymerisierbaren Verbindungen sind Monomere, die nach der Hydrolyse des Acrylnitril-Copolymerisates zusätzliche funktionelle Gruppen in das Polyacrylnitril-Hydrolysat einführen. Besonders bevorzugt ist in diesem Zusammenhang Vinylacetat.

Die Polyacrylnitrile und Acrylnitril-Copolymerisate werden nach dem Verfahren der kontinuierlichen Fällungspolymerisation hergestellt. Die Monomerenkonzentration kann 10 bis 40 Gew.-%, bevorzugt 20 bis 35 Gew.-%, bezogen auf die in gleicher Zeiteinheit zudosierten Gesamtmengen an Monomeren, Isopropanol und Wasser, betragen. Als Initiator können organische und anorganische Peroxide, Persulfate und Azoverbindungen sowie Gemische dieser Verbindungen in Konzentrationen von 0,5 bis 8,0 Gew.-%, bezogen auf die in der gleichen Zeiteinheit zudosierte Menge an Monomeren, eingesetzt werden. Bevorzugt werden Persulfate in Konzentrationen von 1,0 bis 6,0 Gew.-%, besonders bevorzugt ist der Einsatz von Ammoniumpersulfat in Konzentrationen von 2,0 bis 6,0 Gew.-%.

Der Isopropanolgehalt hat Einfluß auf das Molekulargewicht und kann von 5,0 bis 50,0 Gew.-%, bezogen auf die in gleicher Zeiteinheit zudosierten Gesamtmengen an Monomeren, Wasser und Isopropanol, variiert werden.

Bevorzugt werden Isopropanol-Konzentrationen von 10,0 bis 30,0 Gew.-%. Der pH-Wert des wäßrigen Reaktionsmediums kann in einem weiten Bereich schwanken. Je nach verwendetem Initiator können pH-Werte zwischen 2,0 und 8,0 optimal sein.

Bei der besonders bevorzugten Verwendung von Ammoniumpersulfat haben sich pH-Werte von 2,5 bis 4,0 als vorteilhaft erwiesen.

Bei der kontinuierlichen Fällungspolymerisation des Acrylnitrils in Wasser/Isopropanol-Gemischen können zur Steuerung der Molekulargewichte auch übliche, bei der radikalischen Polymerisation wirksame Regler mit eingesetzt werden, z.B. organische Thiol- und Disulfidgruppen enthaltende Verbindungen oder Enolether aliphatischer, insbesondere cycloaliphatischer Aldehyde. Darüberhinaus sind auch Alkene geeignet, die mit Acrylnitril nur begrenzt copolymerisiert sind, jedoch eine hohe Übertragungsaktivität aufweisen. Bevorzugt aus der Gruppe der $C_3$-$C_{18}$-Alkene sind Propen, Buten und Isobuten.

Mit derartigen Reglern gelingt es, die Molekulargewichte der Acrylnitril-Polymerisate sowie der daraus hergestellten Hydrolyseprodukte weiter abzusenken oder aber durch Einsparung von Initiatorkomponenten die Molekulargewichte auf dem geforderten niedrigen Niveau zu halten.

Die optimale Reaktionstemperatur ist ebenfalls abhängig vom eingesetzten Initiatortyp und kann zwischen 60 und 120°C variieren. Bei Verwendung von Ammoniumpersulfat als Initiator werden Reaktionstemperaturen von 80 bis 120°C bevorzugt. Die mittlere Verweilzeit der Monomeren in der Reaktionsmischung während der Polymerisation kann zwischen 1 und 6 h betragen, bevorzugt werden Verweilzeiten von 1 bis 3 h.

Die Raum-Zeit-Ausbeute der Polymerisation nach dem erfindungsgemäßen Verfahren beträgt je nach gewählter Monomerenkonzentration und mittlerer Verweilzeit 17 bis 400, vorzugsweise 67 bis 350 g/l·h, und ist somit größer als die Raum-Zeit-Ausbeute, wie sie z.B. in EP 0 135 727 beansprucht wird.

Es hat sich als zweckmäßig erwiesen, die Polymerisation unter einer Inertgasatmosphäre durchzuführen.

Die erfindungsgemäß hergestellten Polyacrylnitrile und Acrylnitril-Copolymeren mit Molekulargewichten Mw von 1.000 bis 20.000 zeichnen sich durch eine sehr geringe molekulare Uneinheitlichkeit U von 0,3 bis 2,0 aus.

Diese geringen Uneinheitlichkeiten werden nur dann erreicht, wenn die Dosierung der einzelnen Massenströme Monomer bzw. Monomerengemisch, Initiatorlösung und Isopropanol sehr exakt erfolgt. Ebenso muß der Austrag des Reaktionsgemisches aus dem Polymerisationsreaktor konstant erfolgen. Abweichungen vom vorgegebenen Sollwert von mehr als 1 % führen zu größeren Uneinheitlichkeiten als die erfindungsgemäß beanspruchten. Die erfindungsgemäß hergestellten Polymerisate zeichnen sich weiterhin durch einen 0,5 Einheiten pro Molekül übersteigender Gehalt an Hydroxypropyl-Endgruppen aus.

Die im erfindungsgemäßen Verfahren genutzten Polyacrylnitrile und Acrylnitril-Copolymere sind frei von ionischen Endgruppen. So sind auch die aus der Persulfat-Initiierung üblicherweise entstehenden -OSO$_3$Na-Gruppen nicht nachweisbar.

Die genannten besonderen strukturellen Merkmale der Produkte begünstigen deren Verarbeitungsverhalten im Hydrolyseprozeß. Sie sind zugleich maßgebend für das überraschend gute Eigenschaftsprofil der erzeugten Mahl- und Dispergierhilfsmittel verantwortlich.

Die erfindungsgemäß hergestellten Acrylnitril-Polymerisate können nach dem Abstrippen des Isopropanols und der Monomerreste einer sauren oder alkalischen Hydrolyse unterworfen werden. Es ist zweckmäßig, das Abstrippen des Isopropanols und eventueller Monomerreste kontinuierlich durchzuführen und die Stripprodukte kontinuierlich in den Polymerisationsprozeß zurückzuführen.

Der alkalischen Hydrolyse wird aufgrund der bekanntlich höheren Umsetzungsgrade, ausgedrückt z.B. im Reststickstoffgehalt der Hydrolyseprodukte, gegenüber der sauren Hydrolyse der Vorzug gegeben. Der Hydrolysegrad, gemeint ist das Verhältnis der Anzahl an Carboxylat-Gruppen nach der Hydrolyse zur Anzahl der eingesetzten hydrolysierbaren Gruppen (Nitril, Methylcarboxylat usw.), ist abhängig vom Alkali/Polymerisat-Verhältnis sowie von der Verseifungsdauer und der Verseifungstemperatur. Bevorzugt werden molare Verhältnisse der alkalischen Komponenten zur Summe der verseifbaren Gruppen von 0,5 bis 1,1, besonders bevorzugt solche von 0,9 bis 1,05. Als alkalische Verbindungen eignen sich die Alkali- und Erdalkalihydroxide bzw. beliebige Mischungen derselben untereinander. Bevorzugt sind NaOH, KOH und Ca(OH)$_2$, besonders bevorzugt ist NaOH.

Die Hydrolyse wird kontinuierlich bei Temperaturen von 120 bis 220°C, bevorzugt jedoch bei Temperaturen von 160 bis 200°C innerhalb von 0,1 bis 3 h, bevorzugt innerhalb von 0,5 bis 1,0 h durchgeführt.

Der Gegenstand der Erfindung soll anhand der folgenden Beispiele näher erläutert werden.

Beispiele

Verfahren zur Herstellung von Dispergier- und Mahlhilfsmitteln aus niedermolekularen PAN-Hydrolysaten

Ein V4A-Autoklav mit einem Füllvolumen von 40 1, ausgestattet mit einem Anker-Impeller-Rührwerk, drei Dosiervorrichtungen und einer Austragschleuse für den kontinuierlichen Betrieb im Überdruckbereich enthält als Anfahrvorlage die folgenden Komponenten:

11,4 kg entionisiertes Wasser, 6,83 kg Isopropanol,
0,45 kg 1n-Schwefelsäure, 0,83 kg Acrylnitril und
4,65 kg Polyacrylnitril mit einem mittleren Molekulargewicht Mw = 5.500 g/mol.

Die Polymerisation wird nach Temperierung des Reaktorinhalts bei 80°C durch Zugabe von 92 g Ammoniumpersulfat, gelöst in 385 g Wasser, gestartet.

| | Anfahrphase | Versuchseinstellung | |
| --- | --- | --- | --- |
| | (A) | (B) | (C) |
| Lösung I (g/Std.) | | Beispiel 1 | Beispiel 2 |
| Isopropanol | 2990 | 2990 | 5980 |
| Acrylnitril | 3450 | 3450 | 6904 |
| Lösung II (g/Std.) | | | |
| Entionisiertes Wasser | 5470 | 2840 | 11350 |
| Ammoniumpersulfat | 310 | 80,5 | 208 |
| Lösung III (g/Std.) | | | |
| Entionisiertes Wasser | / | 2840 | / |
| H$_2$O$_2$ (35%ig in Wasser) | / | 19,5 | / |
| Mittl. Verweilz. (Std.) | 3,0 | 3,0 | 1,5 |
| Dosierdauer (Std.) | 6,0 | 30,0 | 15,0 |

In der Anfahrphase (A) werden die Lösungen I und II gleichlaufend dosiert. Nach 1 Stunde wird im Reaktor ein Füllgrad von ca. 95 % erreicht. Über Kopf wird nun eine den Dosierströmen entsprechende Menge an Polymerisatsuspension - ca. 12,2 kg/Std. - ausgetragen. Dazu wird eine über Taktgeber gesteuerte Druckschleuse genutzt, deren Füllvolumen so bemessen ist, daß man unter den angegebenen Bedingungen bei möglichst kurzbemessenen Zeitintervallen der Taktung (ca. 30 sec.) den Reaktorinnendruck auf 4 bis 5 bar einstellen kann.

Während des Kontibetriebs wird innerhalb von 5 Stunden die Reaktionstemperatur stufenweise von 80°C auf 89°C angehoben. Danach wird die Dosierung auf die Versuchseinstellung (B) umgestellt, bei der nach weiteren 10 Stunden ein Gleichgewichtszustand erreicht wird, der durch die folgenden Daten gekennzeichnet ist.

| | Versuchseinstellung | |
| --- | --- | --- |
| | (B) | (C) |
| | Beispiel 1 | Beispiel 2 |
| Umsatz (Gew.-%) bez. auf Monomereinsatz | 77,0 | 86,0 |
| Mittlere Teilchengröße [µm] | 12,0 | 13,0 |
| $\pi_{rel.}$ (1%ig in DMAC) | 1,27 | 1,21 |
| Molmassen (g/mol) | | |
| $\overline{M}w$ | 7010 | 5870 |
| $\overline{M}n$ | 3560 | 3110 |
| Uneinheitlichkeit $U = \dfrac{\overline{M}w}{\overline{M}n} -1$ | 0,97 | 0,89 |

Für die Versuchseinstellung (C) erfolgt das Anfahren des Kontireaktors wie zuvor beschrieben. Nach Einstellung der geforderten Reaktionstemperatur von 89°C wird der Kontiprozeß auf die unter (C) genannten Versuchsbedingungen umgestellt. Es werden dabei stündlich ca. 24,4 kg Polymerisatsuspension ausgetragen. Nach ca. 5 Std. wird ein stationärer Gleichgewichtszustand erreicht. Das dabei durch Filtration oder Eindampfen gewonnene niedermolekulare Polyacrylnitril weist die in der Übersicht unter (C) genannten charakteristischen Daten auf.

Die in den Versuchseinstellung (B) und (C) (Beispiel 1) erhaltene Polymerisatsuspension wird über eine mit Sieb- oder Glockenböden bestückte Kolonne (sog. Breikolonne) kontinuierlich vom nicht umgesetzten Acrylnitril und Isopropanol befreit. Die Kolonne wird bei einem Druck von ca. 600 mbar betrieben. Abdestilliertes Acrylnitril und Isopropanol kann nach einer Bestimmung der Zusammensetzung kontinuierlich in den Polymerisationsprozeß zurückgeführt werden.

Im Sumpf der Kolonne erfolgt über eine Dichtemessung die Bestimmung der Feststoffkonzentration der Polymerisatsuspension. Mit Hilfe dieser Größe wird im anschließend erfolgenden Hydrolyseschritt die erforderliche Menge an Natronlauge gesteuert.

Die Hydrolyse erfolgt kontinuierlich in einem Rohrreaktor bei einer Temperatur von 185°C und einer mittleren Verweilzeit von 30 min. Es ergibt sich unter diesen Bedingungen ein Druck von ca. 28 bar. Das bei der Hydrolyse entstandene Ammoniak wird am Ende des Hydrolysereaktors in einer Strippkolonne entfernt. Die Destillation des Ammoniaks wird so geführt, daß über Kopf der Kolonne Ammoniak als 25%ige wäßrige Lösung und im Sumpf das hydrolysierte Polymerisat mit den folgenden Daten erhalten wird.

| | Beispiel 1 | Beispiel 2 |
| --- | --- | --- |
| Reststickstoff (Gew.-%) | 0,02 | 0,03 |
| Feststoffkonzentration (Gew.-%) | 44,2 | 41,8 |
| Molmassen (g/mol) | | |
| $\overline{M}w$ | 5230 | 4025 |
| $\overline{M}n$ | 2750 | 2160 |
| Uneinheitlichkeit $U = \dfrac{\overline{M}w}{\overline{M}n} - 1$ | 0,90 | 0,86 |

Die Molmassen wurden mit Hilfe der Gelpermeations-Chromatographie gemessen. Folgende Bedingungen wurden gewählt:

|  | Polymerisat | Hydrolysat |
|---|---|---|
| Säulen | Shodex AD802-5 | Shodex S804 |
| Eluent | DMAC + 0,5 % LiCl | ent.$H_2O$ + 0,9 % NaCl + 0,02 % $NaN_3$ |
| Flußrate | 0,6 ml/min | 0,6 ml/min |
| Detektion | Refraktometer | Refraktometer |

Die in Beispiel 1 und Beispiel 2 beschriebenen Polyacrylnitrile ergeben nach alkalischer Hydrolyse Dispergier- und Mahlhilfsmittel mit guten anwendungstechnischen Eigenschaften.

**Patentansprüche**

1. Verfahren zur Herstellung von wasserlöslichen, überwiegend Carboxylat-gruppen enthaltenden Polymerisaten durch Hydrolyse von Polyacrylnitrilen, bzw. Acrylnitril-Copolymeren, dadurch gekennzeichnet, daß man zunächst durch kontinuierliche Fällungspolymerisation in Wasser/Isopropanol-Gemischen mit Hilfe von Persulfat-Initiatoren mindestens 85 Gew.-% Acrylnitril enthaltende Polymerisate mit einem mittleren Molekulargewicht Mw von etwa 1.000 bis 20.000 g/mol, einer molekularen Uneinheitlichkeit (U = Mw/Mn - 1) von 0,3 bis 2,0 und einem 0,5 Einheiten pro Molekül übersteigenden Gehalt an Hydroxypropyl-Endgruppen herstellt und die nach der Abtrennung des Isopropanols anfallenden Polymerisatsuspensionen mit mittleren Teilchengrößen von 5 bis 50 μm einem kontinuierlichen Hydrolyseprozeß - unter Einhaltung der vorgegebenen molekularen Verteilungscharakteristik - in Gegenwart von 50 bis 110 Mol-% eines Alkalihydroxids bei 120 bis 220°C und mittleren Verweilzeiten von 6 bis 180 min. unterwirft.

2. Verfahren nach Anspruch 1, dadurch gekennzeichnet, daß bei der Fällungspolymerisation an sich bekannte Regler eingesetzt werden.

3. Verfahren gemäß einem der Ansprüche 1 oder 2, dadurch gekennzeichnet, daß die Polyacrylnitril-Copolymere bis zu 20 Gew.-% $C_1$-$C_4$-Ester bzw. Amide der Acryl- bzw. der Methacrylsäure oder Vinylcarbonsäureester enthalten.

4. Verwendung der nach einem Verfahren gemäß Ansprüchen 1 bis 3 hergestellten Hydrolysate als Dispergier- und Mahlhilfsmittel.

5. Verwendung gemäß Anspruch 4, dadurch gekennzeichnet, daß sie als Dispergierhilfsmittel für Kaolin, $CaCO_3$, Talkum und/oder Gips eingesetzt werden.

**Claims**

1. Process for the production of water-soluble polymers predominantly containing carboxylate groups by hydrolysis of polyacrylonitriles or acrylonitrile copolymers, characterised in that polymers containing at least 85 wt.% of acrylonitrile and having an average molecular weight Mw of approximately 1000 to 20000 g/mol, a molecular polydispersity (U = Mw/Mn - 1) of 0.3 to 2.0 and a hydroxypropyl end group content exceeding 0.5 units per molecule are initially produced by continuous precipitation polymerisation in water/isopropanol mixtures using persulphate initiators and the polymer suspensions obtained after separation of the isopropanol having average particle sizes of 5 to 50 μm are subjected to a continuous hydrolysis process (while maintaining the above-stated molecular distribution characteristic) in the presence of 50 to 110 mol.% of an alkali metal hydroxide at 120 to 220°C and average residence times of 6 to 180 minutes.

2. Process according to claim 1, characterised in that *per se* known chain-transfer agents are used during the precipitation polymerisation.

3. Process according to one of claims 1 or 2, characterised in that the polyacrylonitrile copolymers contain up to 20 wt.% of $C_1$-$C_4$ esters or amides of acrylic or methacrylic acid or vinyl carboxylic acid esters.

4. Use of the hydrolysis products produced using a process according to claims 1 to 3 as dispersion and grinding auxiliaries.

5. Use according to claim 4, characterised in that they are used as dispersion auxiliaries for kaolin, $CaCO_3$, talcum and/or gypsum.

## Revendications

1. Procédé de production de polymères hydrosolubles contenant principalement des groupes carboxylate par hydrolyse de polyacrylonitriles ou de copolymères d'acrylonitriles, caractérisé en ce qu'on prépare tout d'abord par polymérisation continue par précipitation dans des mélanges d'eau et d'isopropanol à l'aide d'initiateurs constitués de persulfates, des polymères contenant au moins 85 % en poids d'acrylonitrile ayant un poids moléculaire moyen $M_p$ d'environ 1000 à 20 000 g/mole, une hétérogénéité moléculaire ($U = Mp/Mn - 1$) de 0,3 à 2,0 et une teneur en groupes hydroxypropyle terminaux dépassant 0,5 unité par molécule et on soumet les suspensions de polymère obtenues après séparation de l'isopropanol, ayant des diamètres moyens de particules de 5 à 50 µm, à une opération continue d'hydrolyse - en respectant la caractéristique de répartition moléculaire indiquée ci-dessus - en présence de 50 à 110 moles % d'un hydroxyde alcalin à 120-220°C et avec des durées moyennes de séjour de 6 à 180 minutes.

2. Procédé suivant la revendication 1, caractérisé en ce qu'on utilise, dans la polymérisation par précipitation, des régulateurs de nature connue.

3. Procédé suivant la revendication 1 ou 2, caractérisé en ce que les copolymères de polyacrylonitrile contiennent jusqu'à 20 % en poids d'esters en $C_1$ à $C_4$ ou d'amides de l'acide acrylique ou de l'acide méthacrylique ou d'esters d'acide vinylcarboxylique.

4. Utilisation des produits d'hydrolyse obtenus par un procédé suivant les revendications 1 à 3 comme agents auxiliaires de dispersion et de broyage.

5. Utilisation suivant la revendication 4, caractérisé en ce que les produits d'hydrolyse sont utilisés comme agents auxiliaires de dispersion pour kaolin, $CaCO_3$, talc et/ou gypse.